**Europäisches Patentamt**

**European Patent Office**

**Office européen des brevets**

(19)

(11) Veröffentlichungsnummer : **0 294 404 B1**

(12)

# EUROPÄISCHE PATENTSCHRIFT

(45) Veröffentlichungstag der Patentschrift :
**15.04.92 Patentblatt 92/16**

(51) Int. Cl.$^5$ : **A61C 13/225**

(21) Anmeldenummer : **87907584.4**

(22) Anmeldetag : **25.11.87**

(86) Internationale Anmeldenummer :
**PCT/DE87/00547**

(87) Internationale Veröffentlichungsnummer :
**WO 88/03786 02.06.88 Gazette 88/12**

(54) **DENTALTECHNISCHER KUPPLUNGSBAUSATZ UND VERFAHREN ZU DESSEN VERWENDUNG.**

(30) Priorität : **25.11.86 DE 3640163**
**09.03.87 DE 3707483**
**23.11.87 DE 3739646**

(43) Veröffentlichungstag der Anmeldung :
**14.12.88 Patentblatt 88/50**

(45) Bekanntmachung des Hinweises auf die
Patenterteilung :
**15.04.92 Patentblatt 92/16**

(84) Benannte Vertragsstaaten :
**AT BE CH DE FR GB IT LI LU NL SE**

(56) Entgegenhaltungen :
**DE-A- 3 406 448**

(56) Entgegenhaltungen :
**DE-U- 8 531 967**
**FR-A- 71 467**
**FR-A- 2 387 638**
**US-A- 4 416 629**

(73) Patentinhaber : **CEKA N.V.**
**Noorderlaan 79 - bus 1**
**B-2030 Antwerpen (BE)**

(72) Erfinder : **BAX, Arthur**
**Mastendreef 16**
**B-2230 Schilde (BE)**

(74) Vertreter : **Ostriga, Harald, Dipl.-Ing. et al**
**Patentanwälte Dipl.-Ing. Harald Ostriga**
**Dipl.-Ing. Bernd Sonnet Stresemannstrasse**
**6-8**
**W-5600 Wuppertal 2 (DE)**

EP 0 294 404 B1

Jouve, 18, rue Saint-Denis, 75001 PARIS

## Beschreibung

Die Erfindung betrifft einen dentaltechnischen Kupplungsbausatz, wie er entsprechend dem Oberbegriff des Patentanspruchs 1 durch die DE-U-8 518 324.5 bekanntgeworden ist.

Entsprechend der DE-U-8 518 324.5 (s. dort S. 5 Abs. 2) wird ein Retentionsteil, und zwar eine matrizenartige Öse, bei welcher die Außenmantelfläche über die gesamte Axiallänge der Öse hinweg glatt und kreiszylindrisch ist, in einer korrelierenden Ausnehmung eines aus Stahl bestehenden Prothesenteils eingeklebt.

Entsprechend einer weiteren Ausführungsform der DE-U-8 518 324.5 ist eine mit einer äußeren Einschnürung versehene Öse außen mit einem eine glatte kreiszylindrische Außenmantelfläche aufweisenden Kunststoffring umspritzt. Der Kunststoffring ist rückstandslos verbrennbar (s. DE-U-8 518 324.5, S. 6 Abs. 2) und daher geeignet, mit Klemm- oder Preßsitz in einer ebenfalls glatten kreiszylindrischen Ausnehmung eines ebenfalls rückstandslos verbrennbaren Kunststoff-Modellteils aufgenommen zu werden. Dieses Kunststoff-Modellteil wird zuvor an ein Wachsmodell des Pfeilerzahns eines Meistermodells angeschlossen und sodann auf dem Wege der Verloren-Wachstechnik zusammen mit der Pfeilerkrone als Halteteil in Metall abgegossen. Mit dem Metall-Halteteil ist die Öse dank des rückstandslos verbrennbaren Kunststoffringes extrakoronal angegossen. Die Bauteile entsprechend der DE-U-8 518 324.5 erfordern eine toleranzarme genaue Doublierarbeit, um Abweichungen von der Parallelität zu vermeiden. Insbesondere die in der DE-U-8 518 324.5 dargestellten Ankervorrichtungen erfordern eine toleranzarme Parallelität, da die Mittelachsen von Öse und patrizenförmigen Anker koinzidieren müssen, also praktisch keine Abweichung von der Parallelität zulassen.

Ein anderer dentaltechnischer Kupplungsbausatz ist durch die DE 34 32 486 A1 vorbekannt. Dieser Stand der Technik hat die Merkmale gemeinsam, wonach der Kupplungsbausatz einer zunächst losen, jedoch mit einer härtbaren Masse fixierbaren Verbindung zwischen einem dentalprothetischen Gerüstteil und einem der beiden Teile - Patrize oder Matrize - eines zahntechnischen Geschiebes oder einer Ankervorrichtung dient. Hierbei ist ein Einsteck- bzw. Retentionsteil mit Außenmantelflächen vorgesehen, welches in eine hohl ausgebildete Halteausnehmung mit Spiel einführbar und vor Einbringen der härtenden Masse mit einem in der Geschiebe- und Ankerprothetik gewünschten Toleranzmaß in der Halteausnehmung beweglich ist. Die Außenmantelfläche des Retentionstells weist mindestens zwei Außenmantel-Teilflächen auf, die bezüglich der Mittelachse der Ausnehmung geneigt und zu Innenmantel-Teilflächen der Ausnehmung parallel verlaufen.

Ausgehend vom Gegenstand der eingangs erörterten DE-U-8 518 324.5, liegt der Erfindung die Aufgabe zugrunde, den bekannten Kupplungsbausatz so zu verbessern, daß ein Retentionsteil mit weniger präziser Vorarbeit wesentlich einfacher, zumindest aber ebenso genau wie bisher, in der Ausnehmung eines Metall-Halteteils befestigt werden kann. Diese Aufgabe wird entsprechend dem Kennzeichenteil des Patentanspruchs 1 gelöst.

Die erfindungsgemäße Ausnehmung, in welcher das zu verklebende Retentionsteil mit räumlichem Bewegungsspiel aufgenommen ist, ist besonders einfach mit einem zylindrischen Werkzeug (Zylinderfräser od.dgl.) herzustellen. Auch ist eine solche gerade kreiszylindrische Halteausnehmung bei einem als Kunststoff-Spritzgußteil herzustellenden rückstandslos verbrennbaren Modell-Halter werkzeugseitig ohne Schwierigkeiten zu entformen.

Erstaunlich an dem erfindungsgemäßen Kupplungsbausatz ist es, daß es mit einer Ausnehmung ohne Hinterschneidung (vgl. im Gegensatz hierzu: DE-A-34 32 486 A1) gelungen ist, die zur Halterung zwischen Retentionsteil und komplementären Kupplungsteil (z.B. Matrize und druckknopfartige Patrize) erforderlichen Widerlagerkräfte aufzubringen. Dieses überraschende Ergebnis läßt sich wohl nur dadurch erklären, daß infolge der erfindungsgemäßen präzisen fluchtenden Justiermöglichkeit zwischen Retentionsteil und komplementärem Kupplungsteil (diese vorteilhafte Justiermöglichkeit ist Gegenstand der Verfahrensansprüche 15-16) schädliche Kippmomente vermieden werden. Auf diese Weise braucht die Klebeverbindung zwischen Retentionsteil und Ausnehmung mit einiger zusätzlicher Sicherheit nur so beschaffen zu sein, daß sie nur die Rastkraft innerhalb der lösbaren Kupplungsverbindung, also praktisch nur die reine Axial-Kraftkomponente, aufzunehmen braucht. Diese reine Axial-Kraftkomponente liegt im Falle einer matrizenartigen Öse und einem in dieser lösbar verrasteten aus Federsegmenten bestehenden druckknopfartigen Patrize beispielsweise in der Größenordnung von 0,8 daN.

Erfindungswesentlich ist auch, daß sowohl die Ausnehmung als auch das Retentionsteil umlaufend dichte Mantelflächen (Innenmantelfläche und Außenmantelfläche) und dichtend daran angeschlossene Bodenflächen aufweisen. Auf diese Weise kann das Retentionsteil den zuvor in die Ausnehmung eingegebenen Klebstoff während des Einsetzens nach Art eines Verdrängerkörpers gleichmäßig über Ausnehmungs-Innenmantelfläche und Retentionsteil-Außenmantelfläche verteilen. Im Vergleich hierzu ist die Wandung der Halteausnehmung gemäß der DE-A 34 32 486 A1 axial geschlitzt, also nicht dicht geschlossen.

Von der FR-A-71 467 (s. Fig. 7 und 8) ist ein kreiszylinderförmiges Retentionsteil mit geschlossenem Boden, nämlich eine Topfbuchse aus Gummi oder elastischem Kunststoff, bekannt, welche in eine kreiszylindrische Öffnung, die ebenfalls mit einem Boden versehen ist, satt eingesetzt wird. Ein als Kugelzapfen ausgebildetes komplementäres Kupplungselement greift mit seinem Kugelkopf in die kreiszylindrische Öffnung der elastischen Topfbuchse mit großem Übermaß ein. Hierdurch ergibt sich eine kraftschlüssige Verspannung mit raumgelenkiger Lagerung des Kugelzapfens, die mit der erfindungsgemäßen Anordnung nicht vergleichbar ist, welche vielmehr eine axial fluchtende Anordnung von Retentionsteil und komplementärem Kupplungsteil erfordert.

Einzelne erfindungsgemäße Ausgestaltungen und Anwendungsfelder des dentaltechnischen Kupplungsbausatzes sind Gegenstand der Patentansprüche 2-14.

Die Patentansprüche 15 und 16 betreffen ein Verfahren, welches einen besonders vorteilhaften Einsatz des erfindungsgemäßen dentaltechnischen Kupplungsbausatzes gewährleistet. Dieses erfindungsgemäße Verfahren soll wie folgt erläutert werden:

Das erfindungsgemäße Verfahren ermöglicht es, die im Zuge der Herstellung von Prothesen-Anordnungen bei der Doubliertechnik entstehenden Toleranzen unwirksam zu machen. Mit dem Verfahren ist zugleich die Möglichkeit geschaffen worden, das Retentionsteil, z.B. eine matrizenartige Öse, das innerhalb des zunächst noch weichen Klebstoffbettes der Halte-Ausnehmung raumbeweglich angeordnet ist, auf einfache und darüber hinaus höchst präzise Weise einzujustieren. Eine solche präzise Einjustierung ist - wie vorerwähnt - insbesondere bei mit engen Toleranzen ineinandergreifenden Druckknopf-Kupplungen wichtig, die aus einer matrizenartigen Öse und aus einem koaxial eingreifenden patrizenartigen Anker bestehen. Wesentlich ist vor allem, daß die Durchführung des Verfahrens mit einfachsten Mitteln erfolgt, zumal eine kreiszylindrische topfförmige Ausnehmung ohne Rücksicht auf nennenswerte Toleranzen mit einem räumlichen Übermaß leicht herzustellen ist.

Aus der DE- 34 32 486 A1 (vgl. dort Fig. 9 in Verbindung mit Seite 19 letzter Abs. sowie S. 20 Abs. 1) ist eine Anordnung zum Verbinden eines Modellgußgerüsts als Teil einer lösbaren Prothese mit dem zugehörigen Anker ersichtlich. Der Begriff "Anker" ist in diesem Zusammenhang unrichtig, denn es ist als "Anker" nur eine Teleskopkrone gezeigt, die aber hinsichtlich ihrer speziellen Funktion überhaupt nicht mit den Eigenarten des gattungsgemäßen Druckknopfankers vergleichbar ist. Die zum Ausgleich von Toleranzen vorgesehene bekannte Verbindungsanordnung ist einerseits mit der Krone und andererseits mit dem Modellgerüst verbunden. Die Verbindungsanordnung zwischen dem Modellgerüst und der Krone besteht aus einem matrizenförmigen Hohlteil, in welchem ein patrizenförmiges Verbindungsteil zunächst raumbeweglich aufgenommen ist und nach seiner Justierung in einer ganz bestimmten Raumposition mit einer Vergußmasse verblockt wird. Beim Gegenstand der DE- 34 32 486 A1 wird also die Position der Einzelelemente der mit einem Druckknopfanker keineswegs vergleichbaren Teleskopkrone nicht beeinflußt. Beim erfindungsgemäße Verfahren hingegen wird die zunächst vor dem Erhärten des Klebstoffs raumbewegliche Anordnung des beim Bekannten nur mit großem Aufwand einzujustierenden Retentionsteils (z.B. matrizenartige Öse) dazu benutzt, überhaupt erst eine präzis fluchtende Anordnung zwischen dem Retentionsteil und dem komplementären Kupplungsteil herzustellen.

Im Zusammenhang mit dem Patentanspruch 16 ist aus der DE-U-85 18 324.5 ein Verfahren als bekannt zu entnehmen, bei dem zunächst ein Halteteil aus rückstandslos verbrennbarem Kunststoff an ein Wachsmodell des Pfeilerzahns eines Meistermodells angeschlossen und sodann auf dem Wege der Verloren-Wachstechnik eine Pfeilerkrone mit dem Halteteil in Metall gegossen und das Retentionsteil in dem Metallhalteteil aufgenommen und befestigt wird. Entsprechend der Erfindung wird dieses bekannte Verfahren dadurch ausgestaltet, daß zunächst die in dem gegebenenfalls topfförmigen Kunststoff-Halteteil angeordnete Ausnehmung mit einem gegenüber dem Raumbedarf des Retentionsteils um einen Bewegungsspielraum für das Retentionsteil vergrößerten Aufnahme-Volumen im Metall-Halteteil (bedingt durch das formgebende Kunststoff-Modellteil) ausgebildet wird, worauf das Retentionsteil mit einem Parallelstift in die mit dem aushärtbaren Kleber versehene Ausnehmung eingesetzt und zusammen mit dem Parallelstift bis zur Aushärtung in der justierten Position gehalten wird. Das erfindungsgemäße Verfahren macht deutlich, daß beim Doublieren entstandene Toleranzen, welche die Raumposition des im Gießverfahren hergestellten Metall-Halteteils beeinflussen, im Hinblick auf eine genaue Position der beiden Druckknopf-Elemente zueinander völlig eliminiert sind.

Es wird nämlich die Einbauposition das Retentionsteil nicht über die Doubliervorgänge ggf. toleranzbehaftet übertragen sondern vielmehr zu allerletzt endgültig definiert hergestellt.

Das erfindungsgemäße Verfahren entsprechend den Ansprüchen 15 und 16 läßt sich analog auf extrakoronale und intrakoronale (axiale) Anordnungen anwenden. Zudem kann die Ausnehmung in einen das Halteteil bildenden Verbindungssteg oder in der freien Stirnseite eines das Halteteil bildenden Implantats oder eines Implantat-Einsatzes vorgesehen sein. Hierbei kann die Ausnehmung alternativ eine topfförmige Öse, eine topfförmige Innengewindebuchse, einen kreiszylindrischen Magneten bzw. ein korrespondierendes ferromagnetisches Bauteil aufnehmen.

Der erfindungsgemäße dentaltechnische Kupplungsbausatz und das erfindungsgemäße Verfahren sind anhand bevorzugter Ausführungsbeispiele in den nachfolgenden Zeichnungen im einzelnen dargestellt. Hierbei zeigen,

Fig. 1 und 2 das Verfahren zum Einsetzen einer matrizenartigen topfförmigen Öse im Zuge der Neuerstellung anhand einer Schnittansicht,

Fig. 3 das Einsetzen einer matrizenartigen topfförmigen Öse im Zuge eines Reparaturverfahrens anhand einer Schnittansicht,

Fig. 4 und 5 Schnittansichten zweier verschiedener Ausführungsformen von Metall-Halteteilen, die jeweils eine extrakoronale Halte-Ausnehmung aufweisen,

Fig. 6 analog zu Fig. 1, Fig. 7 analog zu Fig. 2, Fig 8 analog zu Fig. 3 das Verfahren zum Einsetzen einer topfförmigen Öse im Zusammenhang mit jeweils einer intrakoronalen, d.h. einer Wurzelkappen-Anordnung,

Fig. 9 eine Längs-Schnitt-Ansicht eines Implantat-Halteteils,

Fig. 10 eine schematische perspektivische Darstellung eines stegförmigen Halteteils,

Fig. 11 einen Axialschnitt durch eine topfförmige Öse,

Fig. 12 einen Axialschnitt durch ein topfförmiges Gewindeteil,

Fig. 13 die Ansicht eines Magneten und

Fig. 14 einen Axialschnitt durch einen ferromagnetischen Körper.

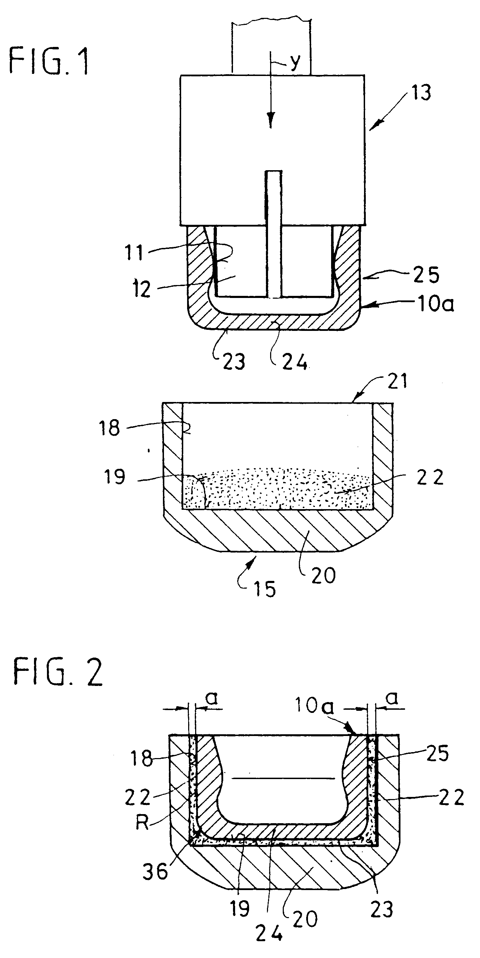

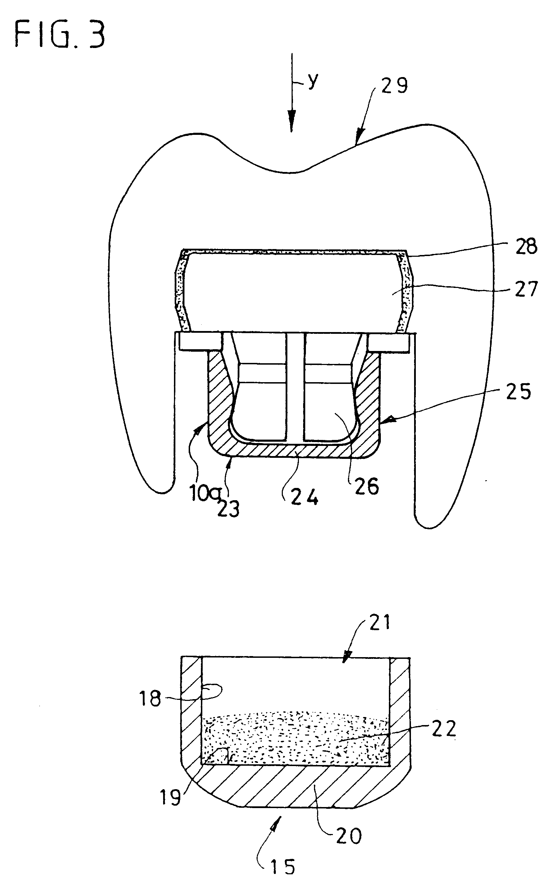

In Fig. 1 ist oben als Retentionsteil eine matrizenartige Öse $10_a$ mit einer inneren Retentionsfläche 11 zur schnappverrastenden Aufnahme eines patrizenförmigen Ankers 26 (s. Fig. 3) dargestellt. Öse $10_a$ und Anker 26 entsprechen im vorliegenden Falle beispielsweise im wesentlichen den im DE-GM 85 18 324 (Fig. 1 und 2) gezeigten Anordnungen.

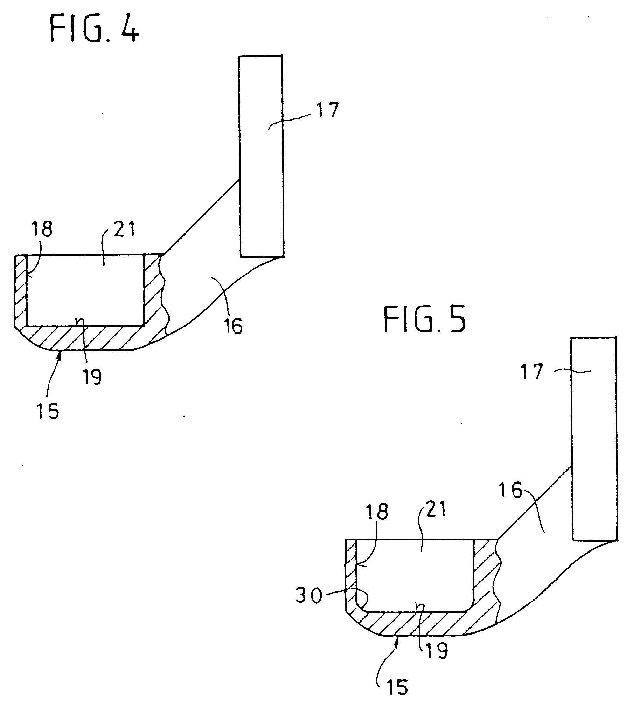

Die Ose $10_a$ ist von inneren verspreizbaren Spannbacken 12 eines Parallelhalters bzw. Parallelstiftes 13 lagejustiert aufgenommen. Ebenfalls lagejustiert ist ein Metall-Halteteil 15, dessen grundsätzliche Bauart ebenfalls aus dem DE-GM 85 18 324 (s. dort Fig. 3) ersichtlich ist. Das Metall-Halteteil 15 ist mit nicht dargestellten Mitteln, beispielsweise mittels eines jeweils einstückig angeschlossenen Kragarms 16 und einer Befestigungsplatte 17 (s. Fig. 4 und 5), an einer nicht dargestellten Pfeilerkrone befestigt.

Das Halteteil 15 ist mit einer in Richtung Parallelstift 13 offenen Halte-Ausnehmung 21 versehen, welche von der Innenmantelfläche 18 (hier: Innenmantelfläche eines geraden Kreiszylinders) und von der kreisförmigen Bodenfläche 19 begrenzt ist. Der Boden 20 des Metall-Halteteils 15 ist geschlossen.

Innerhalb der Ausnehmung 21 befindet sich eine gewisse Menge flüssigen Klebstoffs 22, der zweckmäßig eine geringe Topfzeit besitzt bzw. schnellhärtend ist.

Die Außenbodenfläche 23 der matrizenartigen Öse $10_a$ ist durchgehend, d.h. die Öse ist durch einen Boden 24 geschlossen. Die Öse $10_a$ stellt ein einstückiges Drehteil dar.

Der die Öse $10_a$ tragende Parallelstift 13 wird nun entsprechend der Bewegungsrichtung y zum Halteteil 15 hin und so weit in die Ausnehmung 21 eingeführt, bis die Ose $10_a$ zunächst den Klebstoff 22 kontaktiert und nach Fortsetzen der Bewegung die Einbauposition gemäß Fig. 2 erreicht hat.

Die Öse $10_a$ erhält während des Einsetzens infolge eines jeweiligen Radialabstandes a einen Bewegungsspielraum, welcher eine Justierung bzw. Ausrichtung mit einer Radialkomponente und/oder auch mit einer zusätzlichen Axialkomponente (entlang y) gestattet. Wie aus Fig. 2 ersichtlich, ist der Klebstoff 22 in den Ringraum R zwischen der den ösenseitigen Befestigungsbereich bildenden Außenmantelfläche 25 und der Innenmantelfläche 18 verdrängt, entgegen der Richtung y aufgestiegen und schließlich erhärtet. Bis zur Erhärtung wird der Parallelstift 13 in seiner Halte- und Justierposition gemäß Fig. 1 belassen und erst nach der Erhärtung des Klebers herausgenommen.

Das gemäß Fig. 3 dargestellte Reparaturverfahren im Munde eines Patienten unterscheidet sich von den Darstellungen gemäß den Fig. 1 und 2 dadurch, daß die Öse $10_a$ bereits definiert mit einem patrizenförmigen Anker 26 (komplementäres Retentionsteil) verrastet ist, dessen Fußteil 27 in einer prothesenseitigen Aufnahmeöffnung 28 verklebt ist. Durch Absenken des mit dem verrasteten Druckknopf $10_a$, 26 versehenen abnehmbaren Prothesenteils 29 in Richtung y wird schließlich analog zu den Darstellungen gemäß den Fig. 1 und 2 die Einbauposition der Öse $10_a$ gemäß Fig. 2 erreicht. Bei der Darstellung gemäß Fig. 3 wirkt also die abnehmbare Dentalprothese 29 wie der in Fig. 1 gezeigte Parallelstift 13.

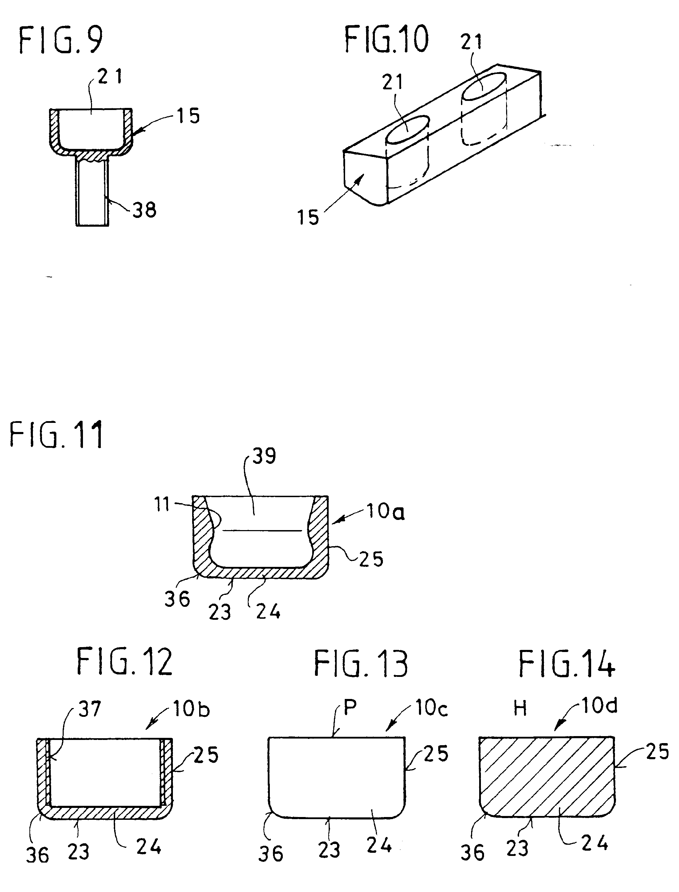

In den Fig. 4 und 5 sind verschiedene Ausführungsformen von Halte-Ausnehmungen 21 dargestellt. Diese weisen die Innenmantelfläche eines geraden Kreiszylinders auf. Die Außenflächen der Retentionsteile allgemein (s. Fig. 11-14) können eine der jeweiligen Kontur der Innenmantelfläche 18 (Fig. 4 und 5) ähnliche (im mathematischen Sinne) Kontur aufweisen, wobei in jedem Falle die Anpassungs- bzw. Bewegungsabstände a (s. Fig. 2) gewährleistet sein müssen. Hierbei können die Retentionsteile allgemein (Fig. 11-14) unterschiedliche Außenmantelflächen aufweisen. Zweckmäßig ist die Außenmaltelfläche 25 eines jeden Retentionsteils, hier der Öse $10_a$, die eines geraden Kreiszylinders. Die Außenbodenfläche 23 stellt eine Kreisfläche dar. Außenbodenfläche 23 und Außenmantelfläche 25 sind über eine konvex gewölbte Kreisringfläche 36 mitein-

EP 0 294 404 B1

ander verbunden.

Als besonders vorteilhaft hervorzuheben sind die bereits in den Fig. 1-3 dargestellten kreiszylindrischen Ausnehmungen 21 (s.a. Fig. 4-10), welche sehr einfach herzustellen sind und welche also, da das Retentionsteil, hier die Öse $10_a$, lediglich mit einer reinen axialen Abzugskomponente (entgegen der Richtung y gemäß Fig. 1 und 3) zu halten ist, das so verklebte Retentionsteil als hinreichend festes Widerlager sichern. Die Ausnehmung 21 gemäß Fig. 5 unterscheidet sich von der Ausnehmung 21 gemäß Fig. 4 noch dadurch, daß die kreiszylindrische Innenbodenfläche 19 über eine konkav gekrümmte Ringfläche 30 an die Innenmantelfläche 18 angeschlossen ist.

Der Klarheit halber bleibt noch zu erwähnen, daß die nicht gezeigten Halter aus rückstandlos verbrennbarem Kunststoff mit den in den Fig. 1-5 gezeigten Halteteilen 15 formlich identisch sind.

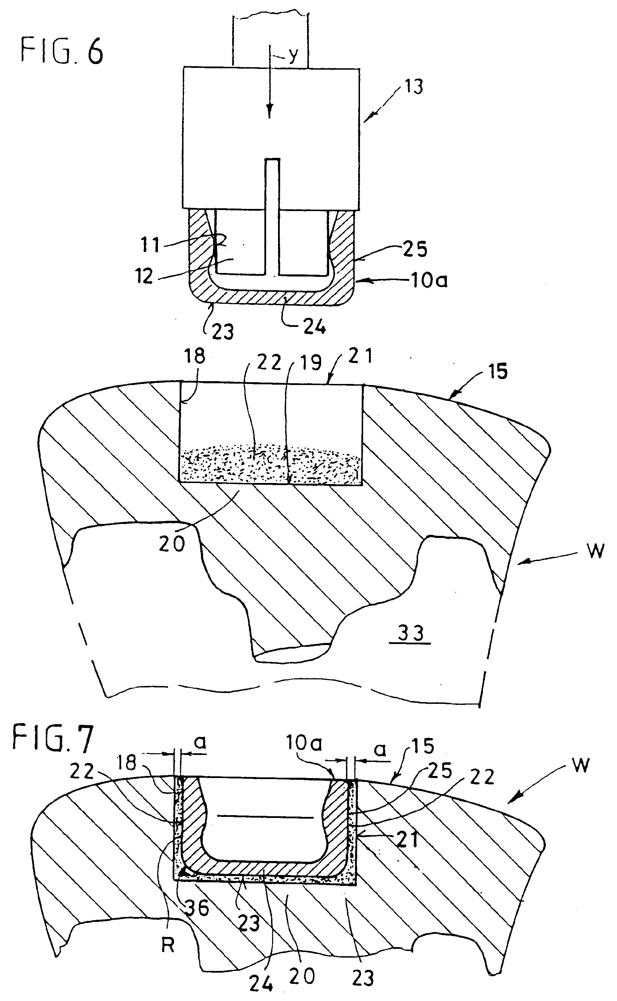

Die Beschreibung der Fig. 1 ist analog und weitestgehend mit denselben Bezugsziffern auch auf Fig. 6 anwendbar. Nur zeigt Fig. 6 im Unterschied zu Fig. 1 eine intrakoronale bzw. axiale Anordnung, bei welcher W eine Wurzelkappe aus Metall, 15 das Metall-Halteteil, 21 die topfförmige Ausnehmung und deren Bodenbereich bedeuten. Die Wurzel, d.h. deren Modell, ist mit 33 bezeichnet.

Fig. 7 wiederum ist analog zu Fig. 2 und der diesbezüglichen Beschreibung die vollendete Wurzelkappen-Anordnung. Fig. 6 und 7 verdeutlichen daher das Verfahren zum Einsetzen eines Retentionsteils, hier einer matrizenartigen Öse $10_a$, im Zuge der Neuerstellung einer Wurzelkappe.

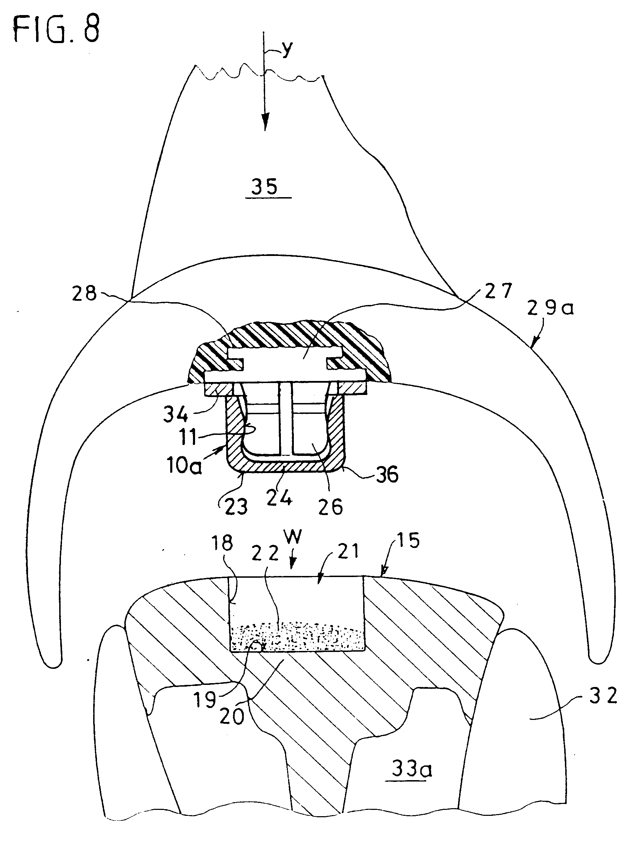

Fig. 8 zeigt analog zu Fig. 3 und der diesbezüglichen Beschreibung das Einsetzen des Retentionsteils (z.B. matrizenartige Öse $10_a$) im Zuge eines Reparaturverfahrens bei einer WurzelkappenAnordnung im Munde des Patienten. Hierbei bedeutet 33a die Wurzel, 32 das Zahnfleisch und 29a die abnehmbare Kunststoffprothese mit Kunstzahn 35, an deren Innenseite bei 28 der hinterschnittene Retentionsbereich 27 des Ankers 26 eingegossen ist. Ein Platzhalter ist mit 34 bezeichnet.

In den Fig. 9 bis 14 sind unterschiedliche Retentionsteile mit $10_a$, $10_b$, $10_c$ und $10_d$ bezeichnet.

Fig. 9 zeigt eine in ein nicht dargestelltes Implantat einzusetzende Schraube mit Außengewinde 38, deren Kopf das Metall-Halteteil 15 mit der Ausnehmung 21 bildet.

Fig. 10 zeigt schematisch ein aus rückstandslos verbrennbarem Kunststoff oder aus Zahnmetall bestehendes stegförmiges Bauteil 15 mit zwei Ausnehmungen 21.

Fig. 11 stellt nochmals gesondert die in den Fig. 1, 3 sowie 6-8 gezeigte Topföse $10_a$ dar. Die Retentionsinnenmantelfläche der Öse $10_a$ sind mit 11 und der gesamte hinterschnittene Retentionshohlraum mit 39 bezeichnet.

Fig. 12 zeigt eine topfförmige Buchse $10_b$ mit Innengewinde 37 zur Aufnahme des Außengewindezapfens (nicht dargestellt) eines patrizenförmigen Ankers 26.

Fig. 13 zeigt einen Magneten $10_c$ mit einer Polfläche P in Ansicht und Fig. 14 einen ferromagnetischen Körper $10_d$, welcher bei Vorhandensein eines anderen Magneten anstelle des Magneten $10_c$ in einer Ausnehmung 21 verklebt sein kann. Die Haftfläche H des ferromagnetischen Körpers $10_d$ ist zur Anlage an der Polfläche P eines Magneten $10_c$ bestimmt.

Zu erwähnen bleibt, daß grundsätzlich alle in den Fig. 11 bis 14 dargestellten Retentionsteile $10_a$, $10_b$, $10_c$ $10_d$ mit irgendeiner in den Fig. 1-10 dargestellten Ausnehmungen 21 in erfindungsgemäßer Weise verklebt sein können.

Innenmantelflächen 18 und Außenmantelflächen 25 von Ausnehmungen 18 und Retentionsteilen $10_a$, $10_b$, $10_c$, $10_d$ sind stets glatt kreiszylindrisch, ggf. sandgestahlt. Eine nicht dargestellte Axialkontur (z.B. Nut) könnte in 18 oder 25 eingearbeitet werden, falls eine zusätzliche Torsionssicherheit um die y-Achse erforderlich ist. Alle Retentionsteile $10_a$, $10_b$, $10_c$, $10_d$ stellen plungerartige Verdrängerkörper dar, mit denen der noch fließfähige Klebstoff 22 beim Einsetzen in die Halteausnehmung 21 gleichmäßig rückwärts steigend im Ringraum R verteilt wird, ohne daß Klebstoff 22 die gegebenenfalls innen gelegene Retentionsfläche 11 versehentlich beeinträchtigen könnte.

## Patentansprüche

1. Dentaltechnischer Kupplungsbausatz mit einer im Munde eines Patienten befestigbaren Armierung, an welcher ein Metall-Halteteil (15) befestigt oder befestigbar ist und eine Ausnehmung (21) mit einer durchgehend geschlossenen Innenmantelfläche (18) aufweist, in welcher ein Retentionsteil ($10_a$-$10_d$), das eine geschlossene Außenbodenfläche (23) aufweist, adhäsiv, insbesondere mittels eines erhärtenden Klebstoffs (22), gehalten ist, wobei die Ausnehmung (21) und das Retentionsteil ($10_a$-$10_d$) jeweils auf gesamter Axialerstreckung die Innenmantelfläche (18) bzw. die Außenmantelfläche (25) eines geraden Kreiszylinders darstellen, und mit einem in einem Dental-Prothesengerüst vorgesehenen komplementären Kupplungsteil (26), welches mit dem Retentionsteil ($10_a$-$10_d$) eine lösbare Kupplungsverbindung eingeht, <u>dadurch gekennzeichnet</u>, daß die Ausneh-

5

mung (21) gegenüber dem Außenvolumen des Retentionsteils ($10_a$-$10_d$) um einen Bewegungsspielraum (a) für das Retentionsteil ($10_a$-$10_d$) vergrößert ist, daß die Ausnehmung (21) an ihrer einen inneren Stirnseite mittels einer Innenbodenfläche (19) geschlossen ist, welche der Außenbodenfläche (23) des Retentionsteils ($10_a$-$10_d$) zugewandt ist und daß das Retentionsteil ($10_a$-$10_d$) axial fluchtend zum komplementären Kupplungsteil (26) in die Ausnehmung (21) eingesetzt ist.

2. Dentaltechnischer Kupplungsbausatz nach Anspruch 1, <u>dadurch gekennzeichnet</u>, daß die Innenbodenfläche (19) der Ausnehmung (21) eine ebene Kreisfläche ist.

3. Dentaltechnischer Kupplungsbausatz nach Anspruch 1, <u>dadurch gekennzeichnet</u>, daß die Innenbodenfläche (19) der Ausnehmung (21) konkavkalottenförmig ist.

4. Dentaltechnischer Kupplungsbausatz nach Anspruch 1 oder nach Anspruch 2, <u>dadurch gekennzeichnet</u>, daß die Innenbodenfläche (19) und die Innenmantelfläche (18) der Ausnehmung (21) über eine konkav gewölbte Kreisringfläche (30) miteinander verbunden sind.

5. Dentaltechnischer Kupplungsbausatz nach einem der Ansprüche 1 bis 4, <u>dadurch gekennzeichnet</u>, daß die Außenbodenfläche (23) des Retentionsteils ($10_a$-$10_d$) eine gerade Kreisfläche darstellt.

6. Dentaltechnischer Kupplungsbausatz nach einem der Ansprüche 1 bis 4, <u>dadurch gekennzeichnet</u>, daß die Außenbodenfläche (23) des Retentionsteils ($10_a$-$10_d$) konvex-kalottenförmig ist.

7. Dentaltechnischer Kupplungsbausatz nach einem der Ansprüche 1 bis 6, <u>dadurch gekennzeichnet</u>, daß die Außenbodenfläche (23) und die Außenmantelfläche (25) des Retentionsteils ($10_a$-$10_d$) über eine konvex gewölbte Kreisringfläche (36) miteinander verbunden sind.

8. Dentaltechnischer Kupplungsbausatz nach einem der Ansprüche 1 bis 7, <u>dadurch gekennzeichnet</u>, daß das Retentionsteil eine topfförmige matrizenartige Öse ($10_a$) mit einem hinterschnittenen zentralen Hohlraum (39) für einen patrizenartigen Anker (26) als komplementäres Kupplungsteil ist.

9. Dentaltechnischer Kupplungsbausatz nach Anspruch 8, <u>dadurch gekennzeichnet</u>, daß die Außenbodenfläche der topfförmigen Öse ($10_a$) von einem einstückig-stoffschlüssigen Boden (24) der insbesondere ein Drehteil darstellenden topfförmigen Öse ($10_a$) gebildet ist.

10. Dentaltechnischer Kupplungsbausatz nach einem der Ansprüche 1 bis 7, <u>dadurch gekennzeichnet</u>, daß das Retentionsteil eine topfförmige Innengewindebuchse ($10_b$) darstellt.

11. Dentaltechnischer Bausatz nach einem der Ansprüche 1 bis 7, <u>dadurch gekennzeichnet</u>, daß das Retentionsteil ein Magnet ($10_c$) bzw. ferromagnetisches Bauteil ($10_d$) für ein komplementäres Kupplungsteil ist, welches ein ferromagnetisches Bauteil ($10_d$) bzw. einen Magnet ($10_c$) darstellt.

12. Dentaltechnischer Kupplungsbausatz nach einem der Ansprüche 1 bis 11, <u>dadurch gekennzeichnet</u>, daß die Ausnehmung (21) extrakoronal an einem Pfeilerzahn-Halteteil (15; Fig. 4 und 5) oder intrakoronal an einem Wurzel-Halteteil (15; Fig. 6 bis 8) vorgesehen ist.

13. Dentaltechnischer Kupplungsbausatz nach einem der Ansprüche 1 bis 11, <u>dadurch gekennzeichnet</u>, daß die Ausnehmung (21) in einem das Halteteil darstellenden Verbindungssteg (15) angeordnet ist (Fig. 10).

14. Dentaltechnischer Kupplungsbausatz nach einem der Ansprüche 1 bis 11, <u>dadurch gekennzeichnet</u>, daß die Ausnehmung (21) an der freien Stirnseite eines das Halteteil bildenden Implantats (15) vorgesehen ist (Fig. 9).

15. Verfahren zur Verwendung eines dentaltechnischen Kupplungsbausatzes nach einem der Ansprüche 1 bis 14, <u>dadurch gekennzeichnet</u>, daß die Ausnehmung (21) mit einem Aufnahme-Volumen ausgebildet wird, welches gegenüber dem Raumbedarf des Retentionsteils ($10_a$-$10_d$) um einen Bewegungsspielraum (a) für das Retentionsteil ($10_a$-$10_d$) vergrößert ist, worauf der mantel- und/oder bodenseitige Befestigungsbereich des Retentionsteils ($10_a$-$10_d$) und/oder die Ausnehmung (21) mit einem aushärtbaren Kleber (22) versehen werden und worauf das Retentionsteil ($10_a$-$10_d$) unter Parallelhaltung (bei 13 oder 29) in die Ausnehmung (21) eingesetzt, justiert und dort bis zur Aushärtung des Klebers (22) in der justierten Position gehalten wird.

16. Verfahren nach Anspruch 15, <u>dadurch gekennzeichnet</u>, daß zunächst ein Halteteil aus rückstandslos verbrennbarem Kunststoff an ein Wachsmodell des Pfeilerzahns eines Meistermodells angeschlossen und sodann auf dem Wege der VerlorenWachstechnik eine Pfeilerkrone mit dem Halteteil (15) in Metall gegossen und das Retentionsteil ($10_a$-$10_d$) in dem Metall-Halteteil (15) aufgenommen und befestigt wird, was bekannt ist, wobei zunächst die in dem gegebenenfalls topfförmigen Kunststoff-Halteteil angeordnete Ausnehmung mit einem gegenüber dem Raumbedarf des Retentionsteils ($10_a$-$10_d$) um einen Bewegungsspielraum (a) für das Retentionsteil ($10_a$-$10_d$) vergrößerten Aufnahme-Volumen im Metall-Halteteil (15) ausgebildet wird, worauf das Retentionsteil ($10_a$-$10_d$) mit einem Parallelstift (13) in die mit dem aushärtbaren Kleber (22) versehene Ausnehmung (21) eingesetzt und zusammen mit dem Parallelstift (13) bis zur Aushärtung in der justierten Position gehalten wird.

**Claims**

1. Prosthodontic coupling assembly having a reinforcement, which is fixable in the mouth of a patient and on which a metal holding part (15) is fixed or fixable and has a recess (21) with a continuous closed inner surface area (18), in which a retention part ($10_a$ - $10_d$) having a closed outer surface area (23) is held adhesively, in particular by means of a hardenable adhesive (22), with the recess (21) and the retention part ($10_a$ - $10_d$) presenting along their entire axial extension the inner surface area (18) and the outer surface area (25) respectively of a straight circular cylinder, the assembly also having a complementary coupling part (26) which is provided in a dental prosthetic frame and with the retention part ($10_a$ - $10_d$) establishes a detachable coupling connection, characterised in that the recess (21) compared to the outer volume of the retention part ($10_a$ - $10_d$) is increased in size by a movement clearance (a) for the retention part ($10_a$ - $10_d$), that the recess (21) is closed at its one inner face by means of an inner bottom surface (19) which faces the outer bottom surface (23) of the retention part ($10_a$ - $10_d$), and that the retention part ($10_a$ - $10_d$) is inserted into the recess (21) so as to be axially flush with the complementary coupling part (26).

2. Prosthodontic coupling assembly according to claim 1, characterised in that the inner bottom surface (19) of the recess (21) is a flat circular surface.

3. Prosthodontic coupling assembly according to claim 1, characterised in that the inner bottom surface (19) of the recess (21) is in the shape of a concave cup.

4. Prosthodontic coupling assembly according to claim 1 or according to claim 2, characterised in that the inner bottom surface (19) and the inner surface area (18) of the recess (21) are connected to one another by a concave annular surface (30).

5. Prosthodontic coupling assembly according to one of claims 1 to 4, characterised in that the outer bottom surface (23) of the retention part ($10_a$ - $10_d$) is a straight circular surface.

6. Prosthodontic coupling assembly according to one of claims 1 to 4, characterised in that the outer bottom surface (23) of the retention part ($10_a$ - $10_d$) is in the shape of a convex cup.

7. Prosthodontic coupling assembly according to one of claims 1 to 6, characterised in that the outer bottom surface (23) and the outer surface area (25) of the retention part ($10_a$ - $10_d$) are connected to one another by a convex annular surface (36).

8. Prosthodontic coupling assembly according to one of claims 1 to 7, characterised in that the retention part is a pot-shaped, female-mould-like loop ($10_a$) with an undercut central cavity (39) for a male-mould-like anchor (26) as a complementary coupling part.

9. Prosthodontic coupling assembly according to claim 8, characterised in that the outer bottom surface of the pot-shaped loop ($10_a$) is formed by an integrally material-locking base (24) of the pot-shaped loop ($10_a$), said loop being in particular a turned part.

10. Prosthodontic coupling assembly according to one of claims 1 to 7, characterised in that the retention part is a pot-shaped, internally threaded bush ($10_b$).

11. Prosthodontic coupling assembly according to one of claims 1 to 7, characterised in that the retention part is a magnet ($10_c$) or a ferromagnetic component ($10_d$) for a complementary coupling part which is a ferromagnetic component ($10_d$) or a magnet ($10_c$) respectively.

12. Prosthodontic coupling assembly according to one of claims 1 to 11, characterised in that the recess (21) is provided extracoronally on an anchorage tooth holding part (15; Figs.4 and 5) or intracoronally on a root holding part (15; Figs.6 to 8).

13. Prosthodontic coupling assembly according to one of claims 1 to 11, characterised in that the recess (21) is disposed in a connecting web (15) representing the holding part (Fig.10).

14. Prosthodontic coupling assembly according to one of claims 1 to 11, characterised in that the recess (21) is provided on the free face of an implant (15) forming the holding part (Fig.9).

15. Process for using an prosthodontic coupling assembly according to one of claims 1 to 14, characterised in that the recess (21) is constructed with a receiving volume which, compared to the spatial requirement of the retention part ($10_a$ - $10_d$), is increased by a movement clearance (a) for the retention part ($10_a$ - $10_d$), with the surface area and/or bottom surface fastening zone of the retention part ($10_a$ - $10_d$) and/or the recess (21) then being provided with a hardenable adhesive (22) and with the retention part ($10_a$ - $10_d$) then being inserted while being held parallel (at 13 or 29) into the recess (21), being aligned and being held there in its aligned position until the adhesive (22) has completely hardened.

16. Process according to claim 15, characterised in that initially a holding part made of completely combustible plastic is connected to a wax pattern of the anchorage tooth of a master pattern and then, using the lost wax process, an anchorage crown is cast with the holding part (15) in metal and the retention part ($10_a$ - $10_d$) is received and fastened in the metal holding part (15), this being known, with initially the recess disposed in the possibly pot-shaped plastic holding part being constructed with a receiving volume in the metal holding part (15) which, compared to the spatial requirement of the retention part ($10_a$ - $10_d$), is increased by a movement clearance (a) for the retention part ($10_a$ - $10_d$), whereupon the retention part ($10_a$ - $10_d$) is inserted with a parallel pin (13) into the recess (21) provided with the hardenable adhesive (22) and, together with the parallel pin (13), is held in its aligned position until hardening is complete.

**Revendications**

1. Attachement dentaire, comprenant une armature pouvant être fixée dans la bouche d'un patient, à laquelle est fixé ou peut être fixé un élément de retenue métallique (15) qui possède un évidement (21) présentant une surface de paroi intérieure (18) entièrement fermée, dans laquelle un élément de rétention ($10_a$-$10_d$) qui présente une surface de fond extérieure fermée (23) est retenu par une liaison adhésive, en particulier au moyen d'un adhésif durcissable (22), l'évidement (21) et l'élément de rétention ($10_a$ à $10_d$) représentant, sur la distance axiale qui est commune à cet évidement et à cet élément de retenue, l'un la surface latérale intérieure (18) et l'autre la surface latérale extérieure (25) d'un cylindre droit à base circulaire, et comprenant un élément d'attachement complémentaire (26) de l'attachement, prévu dans ue structure de prothèse dentaire, qui établit une liaison d'attachement démontable avec l'élément de rétention ($10_a$ à $10_d$), caractérisé par le fait que l'évidement (21) est agrandi comparativement au volume extérieur de l'élément de rétention ($10_a$ à $10_d$) d'un jeu (<u>a</u>) donnant une liberté de mouvement à l'élément de rétention ($10_a$ à $10_d$), que l'évidement (21) est fermé, au niveau de sa face frontale intérieure, par une surface de fond intérieure (19) qui est dirigée vers la surface de fond extérieure (23) de l'élément de rétention ($10_a$ à $10_d$), et que l'élément de rétention ($10_a$ à $10_d$) est mis en place dans l'évidement (21) dans une disposition alignée axialement sur l'élément d'accouplement complémentaire (26).

2. Attachement dentaire selon la revendication 1, caractérisé par le fait que la surface intérieure de fond (19) de l'évidement (21) est une surface circulaire plane.

3. Attachement dentaire selon la revendication 1, caractérisé par le fait que la surface intérieure de fond (19) de l'évidement (21) est en forme de calotte concave.

4. Attachement dentaire selon la revendication 1 ou la revendication 2, caractérisé par le fait que la surface intérieure de fond (19) et la surface latérale intérieure (18) de l'évidement (21) sont raccordées l'une à l'autre par une surface de couronne de cercle (31) incurvée avec une forme concave.

5. Attachement dentaire selon une des revendications 1 à 4, caractérisé par le fait que la surface extérieure de fond (23) de l'élément de retenue ($10_a$ à $10_d$) représente une surface circulaire droite.

6. Attachement dentaire selon une des revendications 1 à 4, caractérisé par le fait que la surface extérieure de fond (23) de l'élément de retenue ($10_a$ à $10_d$) est en forme de calotte convexe.

7. Attachement dentaire selon une des revendications 1 à 6, caractérisé par le fait que la surface extérieure de fond (23) et la surface latérale extérieure (25) de l'élément de rétention ($10_a$ à $10_d$) sont raccordées l'une à l'autre par l'intermédiaire d'une surface de couronne de cercle (36) incurvée avec une forme convexe.

8. Attachement dentaire selon une des revendications 1 à 7, caractérisé par le fait que l'élément de rétention est un anneau ($10_a$) femelle ou de type matrice, en forme de godet, présentant une cavité centrale (39) à contre-dépouille destinée à recevoir un ancrage (26) mâle ou de type matrice constituant l'élément complémentaire de l'attachement.

9. Attachement dentaire selon la revendication 8, caractérisé par le fait que la surface extérieure de fond de l'anneau ($10_a$) en forme de godet est formée d'un fond (24) d'un seul tenant, venu de matière, de l'anneau ($10_a$) en forme de godet qui constitue une pièce tournée.

10. Attachement dentaire selon une des revendications 1 à 7, caractérisé par le fait que l'élément de rétention est une douille en forme de godet ($10_b$) à filetage intérieur.

11. Attachement dentaire selon une des revendications 1 à 7, caractérisé par le fait que l'élément de rétention est un aimant ($10_c$) ou un composant ferromagnétique ($10_d$) destiné à coopérer avec un élément complémentaire de l'attachement qui est constitué par une pièce ferromagnétique ($10_d$) ou par un aimant ($10_c$).

12. Attachement dentaire selon une des revendications 1 à 11, caractérisé par le fait que l'évidement (21) est prévu dans une disposition extracoronnaire sur un élément de retenue de dent à pivot (15 ; figures 4 et 5) ou dans une disposition intracoronnaire, sur un élément de retenue solidaire d'une racine (15 ; figures 6 et 8).

13. Attachement dentaire selon une des revendications 1 à 11, caractérisé par le fait que l'évidement (21) est prévu dans un bridge de liaison (15) constituant l'élément de retenue (figure 10).

14. Attachement dentaire selon une des revendications 1 à 11, caractérisé par le fait que l'évidement (21) est prévu sur la surface frontale libre d'un implant (15) qui forme l'élément de retenue (voir figure 9).

15. Procédé d'utilisation d'un attachement dentaire selon une des revendications 1 à 14, caractérisé par le fait que l'évidement (21) est conformé avec un volume de logement qui est agrandi, comparativement à l'encombrement de l'élément de rétention ($10_a$ à $10_d$), d'un jeu (a) qui donne une liberté de mouvement pour l'élément de rétention ($10_a$ à $10_d$), après quoi la zone de fixation côté paroi latérale et/ou côté fond de l'élément de rétention ($10_a$ à $10_d$) et/ou de l'évidement (21) sont munis d'une colle durcissable (22), et après quoi l'élément de rétention ($10_a$ à $10_d$) est emboîté dans l'évidement (21) en conservant le parallélisme (en 13 ou en 29), puis ajusté et maintenu à cet endroit dans la position ajustée jusqu'au durcissaient de la colle (22).

16. Procédé selon la revendication 15, caractérisé par le fait que, tout d'abord, un élément de retenue fait d'une résine synthétique brûlant sans résidu est fixée à un modèle de la dent à pivot d'un modèle maître et, ensuite, par application de la technique de coulée à la cire perdue, une couronne à pivot, munie de l'élément de retenue (15), est coulée en métal et l'élément de rétention ($10_a$ à $10_d$) est logé et fixé dans l'élément de retenue en métal (15), ce qui est connu, cependant que, tout d'abord, l'évidement prévu dans l'élément de retenue en résine synthétique, éventuellement en forme de godet, est formé dans l'élément de retenue en métal (15) avec un volume de logement agrandi comparativement à l'encombrement de l'élément de rétention ($10_a$ à $10_d$), d'un jeu (a) donnant une -liberté de mouvement à l'élément de rétention ($10_a$ à $10_d$), après quoi l'élément de rétention ($10_a$ à $10_d$) est emboîté à l'aide d'une tige parallèle (13) dans l'évidement (21) garni de la colle durcissable (22), et est retenu dans la position ajustée, conjointement avec la tige parallèle (13), jusqu'au durcissement.

FIG.1

FIG. 2

10

# FIG. 3

FIG. 4

18   21

17

16

19

15

FIG. 5

17

16

18   21

30

19

15

FIG. 6

13

11
12

25
10a

23   24

18   22  19  21   15

20

W

33

FIG. 7

a   10a   a   15

22  18   25  22

21

36

R

24  20  23

23

W

# FIG. 8

FIG.9

FIG.10

FIG.11

FIG.12

FIG.13

FIG.14